# EUROPEAN PATENT APPLICATION

(11) **EP 4 818 794 A1**
(43) Date of publication of application: **07.10.2026**
(21) Application number: 25315118.7
(22) Date of filing: 03.04.2025
(51) Int. Cl.: G02C 5/22, G02C 11/00, G02B 27/01

(54) **HINGE FOR HEAD WORN DEVICES**

(71) Applicant: ESSILOR INTERNATIONAL, 94220 Charenton-Le-Pont (FR)
(72) Inventor: Chatain, Léo, 75013 PARIS (FR); Gupta, Krishna, 93160 NOISY-LE-GRAND (FR); Jouard, Ludovic, 75011 PARIS (FR)
(74) Representative: Modiano, Micaela Nadia

(57) **Abstract**

A hinge (1) for head-mountable device, which comprises a male hinge part (2) and a female hinge part (3) which are adapted to be coupled to each other, wherein the coupling between the male hinge part (2) and the female hinge part (3) is obtained by way of coupling means (6, 7), which are arranged at the axis of rotation of the hinge, the coupling means (6, 7) being implemented by control and command means (7) which are adapted to rotate around the axis of the hinge, sensor means (8) being integrated in the hinge, for the purpose of detecting a rotation of said control and command means (7), in order to convert such rotation to an electrical signal adapted to be sent to an electronic unit of the head-mountable devices.

## Description

The present invention relates to a hinge for head-mountable, mountable devices and mountable.

By head-mountable device, one means a device designed to be mounted on the head of the individual. In this specification, head-mountable devices encompass any type of head mountable device designed to be worn in front of at least one eye of a user in any suitable form factor. It includes head-mounted display device (e.g. near eye display device, augmented reality devices, virtual reality devices and/or mixed reality devices), helmet, headset, smart eyewear (e.g. eyeglasses, goggles, masks, visors, clip-on,..),

The head-mountable device may include various electronic elements and active functions, such as cameras, video cameras, the ability to play music tracks, hearing aid etc..

The head-mountable device may comprise one or several active optical elements whose optical function may be controlled and modified such as phase modulation optical element, amplitude modulation optical elements and informative optical elements. As examples, the active optical elements may be a dimming element or an electrochromic element whose light related properties may be controlled or a variable power element.

Such head-mountable - devices necessarily offer a command so that the user can modify and those functions and/or activate those functions.

Currently, the activation and control of head-mountable devices, are assigned to buttons which are conveniently placed, for example on the temple of a frame for eyeglasses.

This solution, although effective in many cases, does not for example allow the possibility of detecting the position of the temple with respect to the eyeglasses, so as to be able to determine whether or not the eyeglasses are in use, i.e. whether the temples are folded on the front and therefore the eyeglasses are not in use, or whether the temples are in the open condition and therefore the eyeglasses are being worn by the user.

The aim of the present invention is to provide a hinge for head - mountable device that makes it possible to activate and control the functions of the device.

Within this aim, an object of the present invention is to provide a hinge for head -mountable device that makes it possible to provide an indication of whether or not the device can be ready for use or not.

Another object of the present invention is to provide a hinge for head - mountable device that is highly reliable, easily and practically implemented, and at low cost.

This aim and these and other objects which will become more apparent hereinafter are achieved by a hinge for a head-mountable device, which comprises a male hinge part and a female hinge part which are adapted to be coupled to each other, characterized in that the coupling between said male hinge part and said female hinge part is obtained by way of coupling means, which are arranged at the axis of rotation of the hinge, said coupling means being implemented by control and command means which are adapted to rotate around the axis of the hinge, sensor means being integrated in said hinge, for the purpose of detecting a rotation of said control and command means, in order to convert said rotation to an electrical signal adapted to be sent to an electronic unit of said head -mountable device.

Further characteristics and advantages of the invention will become better apparent from the description of a preferred, but not exclusive, embodiment of the hinge according to the present invention, which is illustrated by way of non-limiting example in the accompanying drawings wherein:

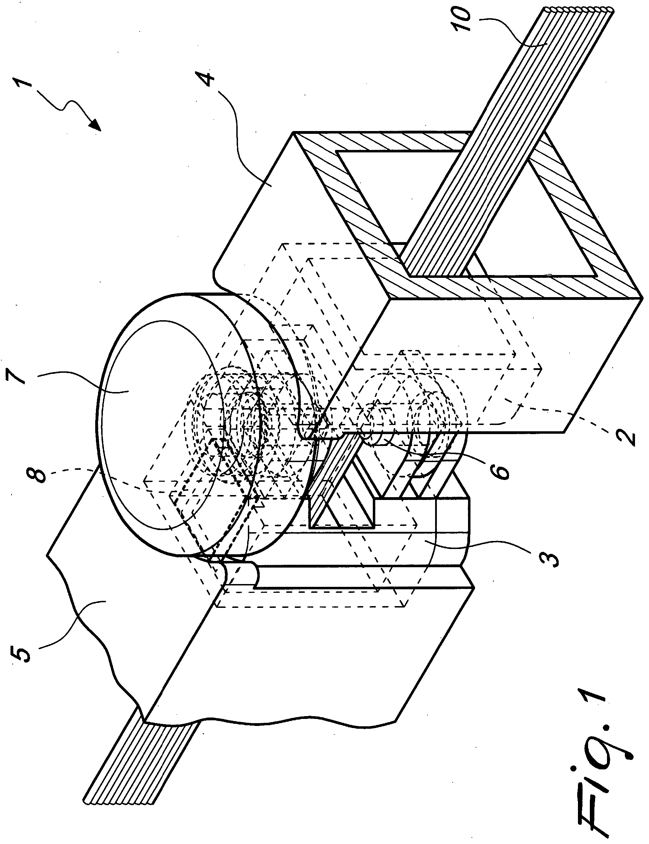

figure 1 is a perspective view of the hinge according to the present invention;

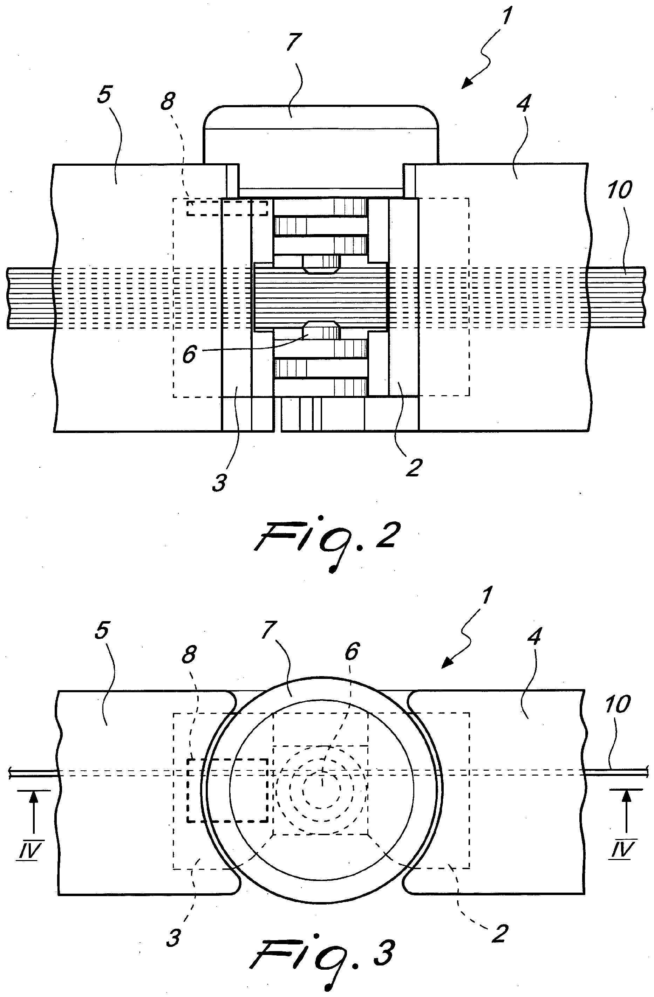

figure 2 is a side view of the hinge according to the present invention;
figure 3 is a top view of the hinge according to the present invention;

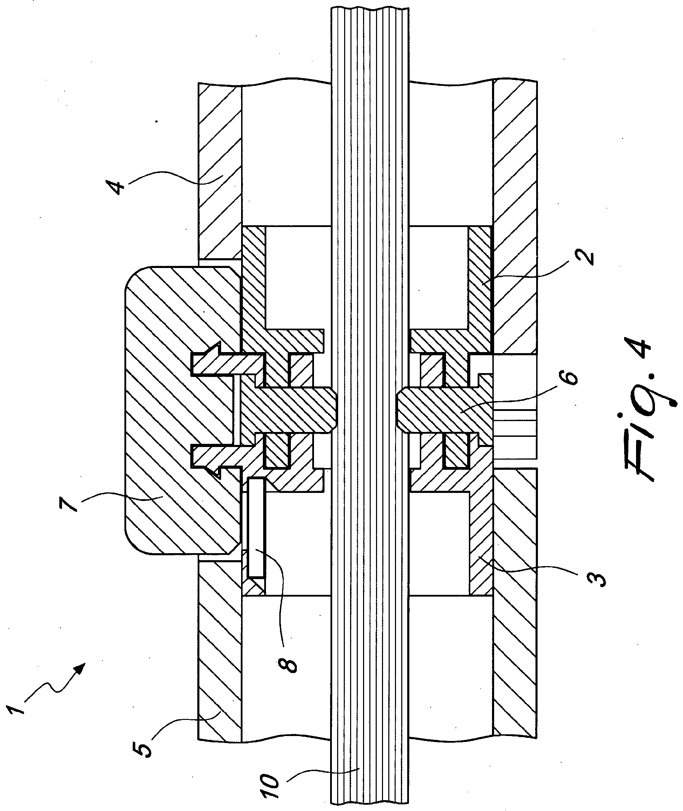

figure 4 is a longitudinal sectional view of the hinge according to the present invention.

With reference to the figures, the hinge for head -mountable devices according to the present invention, generally designated by the reference numeral 1, comprises a male hinge portion and a female hinge portion, respectively indicated by the reference numeral 2 and by the reference numeral 3, which can be for example provided respectively on the front and on the temple of the eyeglasses or vice versa. The head -mountable device is here exemplified by a smart eyewearin a form of eyeglasses.

The two hinge portions, male and female 2, 3, are adapted to be coupled to each other with the capacity for mutual rotation.

In the figures, the reference numeral 4 indicates the front of the eyeglasses, but it can also indicate the temple as said above, and the reference numeral 5 indicates the temple of the eyeglasses, but it can also indicate the front of the same.

In substance, therefore, the hinge entails a coupling between a male part 2 of the hinge and the female part 3 of the hinge, which can be located indifferently on the temple 5 or on the front 4 of the eyeglasses.

The coupling between the male part 2 of the hinge and the female part 3 of the hinge occurs by way of coupling means that can be a single coupling means or a lower and an upper coupling means, wherein the lower coupling means can for example be screw means 6 and the upper coupling means can for example comprise control and command means for example implemented by a crown wheel 7 which is located at the axis of the hinge and therefore in axial alignment with the screw means 6.

Substantially, the crown wheel 7 protrudes from the surface of the temple 5 so as to be easily manipulated by the user, with facilitated grip. Conveniently, such crown wheel 7 can have a knurled outer surface for a better grip.

The crown wheel 7 can rotate freely, for example through 360°, about the axis of the hinge and is used to command and control the functions of the smart glasses.

The hinge according to the invention has at least one crown wheel 7, but there can also be two crown wheels 7, one placed in an upper position and one placed in a lower position, along the same hinge axis.

The accompanying figures show the case of a single crown wheel 7.

There are sensor means 8 integrated in the hinge according to the invention, arranged about the crown wheel 7 so as to detect its angle of rotation and convert it to an electrical signal which is sent to an electronic unit accommodated in the temple 5 of the smart glasses.

The sensor means 8 can comprise an optical tracking sensor, with the advantage of having high resolution, low power consumption and miniaturization, or they can be magnetic sensors, optical sensors, Hall effect sensors, potentiometers etc.

The hinge according to the invention is internally hollow so as to allow the passage of an electric conductor 10 which is adapted to transport signals, power etc.

In substance, therefore, the crown wheel 7 is designed to rotate about the axis of the hinge.

The coupling between the male hinge part 2 and the female hinge part 3 can occur with the surfaces in contact conveniently coated in order to obtain a specific friction coefficient and provide long-lasting performance.

The hinge configuration according to the present invention described above can also be used to detect the closure of the temple 5 with respect to the front 4, for example assuming that the crown wheel 7 would not be movable with respect to the front 4 and the sensor means 8 are incorporated in the temple 5.

The rotation of the crown wheel 7 can be, as mentioned, unlimited about the axis of the hinge, or it can also be a rotation to a lesser extent, for example of an angle up to 360 degrees. The rotation of the crown wheel 7 about its own axis makes it possible, by virtue of the presence of the sensor means 8, to convert the angle of rotation of the crown wheel 7 to an electrical signal.

Therefore, the crown wheel 7 can be used as a means for selecting the functions of the smart eyewear, scrolling through menu pages, and the like.

The invention also relates to head mountable device which comprise a front 4, a pair of temples 5 and at least one hinge 1 according to the present invention.

In practice it has been found that the hinge for head mountable device according to the present invention fully achieves the set aim and objects, in that it makes it possible to have, integrated around its own hinge axis, at least one crown wheel, more generally command and control means, which can be used by the user to activate and control the various functions of the head mountable device.

The hinge, thus conceived, is susceptible of numerous modifications and variations, all of which are within the scope of the appended claims.

Moreover, all the details may be substituted by other, technically equivalent elements.

In practice the materials employed, and the contingent dimensions and shapes, may be any according to requirements and to the state of the art.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A hinge (1) for head-mountable device, which comprises a male hinge part (2) and a female hinge part (3) which are adapted to be coupled to each other, **characterized in that** the coupling between said male hinge part (2) and said female hinge part (3) is obtained by way of coupling means (6, 7), which are arranged at the axis of rotation of the hinge, said coupling means (6, 7) being implemented by control and command means (7) which are adapted to rotate around the axis of the hinge, sensor means (8) being integrated in said hinge, for the purpose of detecting a rotation of said control and command means (7), in order to convert said rotation to an electrical signal adapted to be sent to an electronic unit of said head -mountable device.

2. The hinge according to claim 1, **characterized in that** said coupling means (6, 7) comprise a lower coupling means (6) and an upper coupling means (7), which are arranged at the axis of rotation of the hinge, at least one of the upper coupling means (7) and the lower coupling means (6) being implemented by control and command means (7) which are adapted to rotate around the axis of the hinge.

3. The hinge according to claim 1 or 2, **characterized in that** said at least one command and control means (7) comprises a crown wheel (7).

4. The hinge according to claim 3, **characterized in that** said crown wheel (7) is free to rotate about the axis of the hinge.

5. The hinge according to claim 4, **characterized in that** said crown wheel (7) is free to rotate about the axis of the hinge of an angle up to 360 degrees.

6. The hinge according to one or more of the preceding claims, **characterized in that** said crown wheel (7) is knurled on the outer surface for a better grip by the user.

7. The hinge according to one or more of the preceding claims, **characterized in that** it is internally hollow for the passage of an electric conductor (10) for the transmission of signals and/or power.

8. The hinge according to one or more of the preceding claims, **characterized in that** said sensor means (8) comprise an optical tracking sensor.

9. The hinge according to one or more of the preceding claims, **characterized in that** said sensor means (8) comprise at least one among an optical tracking sensor, a magnetic sensor, an optical sensor, a Hall effect sensor, a potentiometer.

10. The hinge according to one or more of the preceding claims, **characterized in that** said lower coupling means (6) between said male part of the hinge and said female part of the hinge comprise screw means (6).

11. The hinge according to one or more of the preceding claims, **characterized in that** said male part (2) of the hinge is joined to a front (4) of smart glasses and said female part (3) of the hinge is joined to a temple (5) of the smart glasses.

12. The hinge according to one or more of the preceding claims, **characterized in that** said male part (2) of the hinge is joined to the temple (5) of smart glasses and said female part (3) of the hinge is joined to the front (4) of the smart glasses.

13. The hinge according to one or more of the preceding claims, **characterized in that** said crown wheel (7) protrudes from the outer face of said temple (5).

14. Head mountable device comprising a front (4) and a pair of temples (5), **characterized in that** it comprises at least one hinge (1) which comprises a male hinge part (2) and a female hinge part (3) which are adapted to be coupled to each other, **characterized in that** the coupling between said male hinge part (2) and said female hinge part (3) is obtained by way of coupling means (6, 7), which are arranged at the axis of rotation of the hinge, said coupling means (6, 7) being implemented by control and command means (7) which are adapted to rotate around the axis of the hinge, sensor means (8) being integrated in said hinge, for the purpose of detecting a rotation of said control and command means (7), in order to convert said rotation to an electrical signal adapted to be sent to an electronic unit of said device.

## Amended claims

### Amended claims in accordance with Rule 137(2) EPC.

1. A hinge (1) for head-mountable device, which comprises a male hinge part (2) and a female hinge part (3) which are adapted to be coupled to each other, **characterized in that** the coupling between said male hinge part (2) and said female hinge part (3) is obtained by way of coupling means (6, 7), which are arranged at the axis of rotation of the hinge, said coupling means (6, 7) being implemented by control and command means (7) which are adapted to rotate around the axis of the hinge, sensor means (8) being integrated in said hinge, for the purpose of detecting a rotation of said control and command means (7), in order to convert said rotation to an electrical signal adapted to be sent to an electronic unit of said head -mountable device, **characterized in that** said crown wheel (7) protrudes from the outer face of said temple (5).

2. The hinge according to claim 1, **characterized in that** said coupling means (6, 7) comprise a lower coupling means (6) and an upper coupling means (7), which are arranged at the axis of rotation of the hinge, at least one of the upper coupling means (7) and the lower coupling means (6) being implemented by control and command means (7) which are adapted to rotate around the axis of the hinge.

3. The hinge according to claim 1 or 2, **characterized in that** said at least one command and control means (7) comprises a crown wheel (7).

4. The hinge according to claim 3, **characterized in that** said crown wheel (7) is free to rotate about the axis of the hinge.

5. The hinge according to claim 4, **characterized in that** said crown wheel (7) is free to rotate about the axis of the hinge of an angle up to 360 degrees.

6. The hinge according to one or more of the preceding claims, **characterized in that** said crown wheel (7) is knurled on the outer surface for a better grip by the user.

7. The hinge according to one or more of the preceding claims, **characterized in that** it is internally hollow for the passage of an electric conductor (10) for the transmission of signals and/or power.

8. The hinge according to one or more of the preceding claims, **characterized in that** said sensor means (8) comprise an optical tracking sensor.

9. The hinge according to one or more of the preceding claims, **characterized in that** said sensor means (8) comprise at least one among an optical tracking sensor, a magnetic sensor, an optical sensor, a Hall effect sensor, a potentiometer.

10. The hinge according to one or more of the preceding claims, **characterized in that** said lower coupling means (6) between said male part of the hinge and said female part of the hinge comprise screw means (6).

11. Head mountable device comprising a front (4) and a pair of temples (5), which are joined with a hinge according to one or more of the preceding claims.

12. The head mountable device according to claim 11, **characterized in that** said male part (2) of the hinge is joined to a front (4) of said head mountable device and said female part (3) of the hinge is joined to a temple (5) of the head mountable device .

13. The head mountable device according to claim 11, **characterized in that** said male part (2) of the hinge is joined to the temple (5) of the head mountable device and said female part (3) of the hinge is joined to the front (4) of the head mountable device.

14. The Head mountable device according to one or more of claims 11-13, **characterized in that** said head mountable device are smart glasses.
